# EUROPEAN PATENT SPECIFICATION

(11) **EP 3 845 797 B1**
(45) Date of publication and mention of the grant of the patent: **08.04.2026**
(21) Application number: 18932216.7
(22) Date of filing: 28.08.2018
(51) Int. Cl.: F21S 43/145, F21S 43/14, B60Q 1/26, F21S 43/15, F21S 43/19, F21S 43/20, H05B 45/10, H05B 47/105, B60Q 1/38, F21W 103/10, F21W 103/20

(54) **VEHICLE LAMP USING SEMICONDUCTOR LIGHT-EMITTING DEVICE**
FAHRZEUGLAMPE MIT VERWENDUNG EINES LICHTEMITTIERENDEN HALBLEITERBAUELEMENTS
LAMPE DE VÉHICULE UTILISANT UN DISPOSITIF ÉLECTROLUMINESCENT À SEMI-CONDUCTEURS

(43) Date of publication of application: 07.07.2021
(73) Proprietor: ZKW Group GmbH, 3250 Wieselburg (AT)
(72) Inventor: YOON, Shinwoo, Seoul 06772 (KR); YOON, Sangho, Seoul 06772 (KR); CHO, Hankyu, Seoul 06772 (KR)
(74) Representative: Patentanwaltskanzlei Matschnig & Forsthuber OG
(86) International application number: PCT/KR2018/009915
(87) International publication number: WO 2020/045699

(56) References cited:
- EP-A2- 1 033 525
- CN-U- 205 991 410
- DE-A1- 10 025 563
- JP-A- 2008 041 558
- JP-A- 2018 073 660
- KR-A- 20080 105 515
- KR-A- 20170 037 173
- KR-A- 20170 080 783
- KR-A- 20180 057 405
- KR-B1- 100 847 924
- KR-B1- 101 803 874
- US-A- 5 519 596
- US-A1- 2013 049 570

## Description

### TECHNICAL FIELD

The present invention relates to a vehicle lamp according to the preamble of claim 1.

### BACKGROUND ART

A vehicle or car is equipped with various lamps having lighting functions and signaling functions. In general, halogen lamps or gas discharge lamps are usually used, but in recent years, light emitting diodes (LEDs) are in the spotlight as light sources for vehicle lamps.

The LED can enhance a degree of freedom for design of a lamp by minimizing a size thereof and exhibit economic efficiency by virtue of a semi-permanent lifespan, but most of the LEDs are currently produced in a form of a package. The LED itself other than the package is under development as a semiconductor light emitting device of converting a current into light, namely, an image displaying light source equipped in an electronic device such as an information communication device.

In recent years, attempts have been made to vary an illumination (lighting) pattern of a lamp as the size of the semiconductor light emitting device decreases. However, in order to realize various illumination patterns, structures other than a light source are required, which causes an increase in the size of the lamp, a decrease in brightness, and the like. As a result, various implementations of the illumination pattern of the lamp are limited. Document US 5 519 596 A discloses a module comprised of a plurality of light emitting diode lamps or other light emitting devices and a metal nesting frame with flexible joints between each row of LED bus bars. Document CN 205 991 410 U discloses an organic light emitting diode (OLED) lighting device for an automobile tail light.

Document EP 1 033 525 A2 discloses a flexible light emission diode multi-sectional module, especially for a vehicle lamp housing, comprising a number of rigid conductor plates which are spaced apart and connected by a flexible conductor plate. A number of LEDs are located on the flexible plates near the rigid plates. A further vehicle lamp is known from JP 2008-41558 A.

### DISCLOSURE

### TECHNICAL PROBLEM

The invention is set out in the appended set of claims. One aspect of the present invention is to provide a lamp structure capable of realizing a stereoscopic illumination pattern.

### TECHNICAL SOLUTION

Embodiments disclosed herein provide a vehicle lamp having a light source unit in the form of a surface. The light source unit includes a plurality of planar portions having a surface shape and disposed in different planes, and a plurality of bent portions connecting two different planar portions and formed in a bending manner. Two planar portions disposed with one bent portion interposed therebetween are provided at one end and another end of the bent portion, respectively. Two bent portions disposed with one planar portion interposed therebetween are bent in different directions. The light source unit is provided with light-emitting regions defined in a partial region thereof so that light is emitted, and non-light-emitting regions defined in the remaining region so that no light is emitted.

In one embodiment, the bent portions may be configured as non-light-emitting regions.

In one embodiment, the planar portions may be partially configured as non-light-emitting regions.

In one embodiment, at least several of the planar portions may be configured such that an angle between two adjacent planar portions is less than 90°.

In one embodiment, any one of the two planar portions having the angle of less than 90° therebetween may be configured as a non-light-emitting region.

In one embodiment, at least several of the planar portions may be configured such that an angle between two adjacent planar portions is greater than 90°.

In one embodiment, each of the two planar portions having the angle of greater than 90° therebetween may be configured as a light-emitting-region at least a part thereof.

The lamp according to the present invention includes a first light collecting region for collecting light at a first focal length, a second light collecting region for collecting light at a second focal length different from the first focal length, and a light collecting unit disposed to overlap the light source unit. The light collecting unit comprises the first light collecting region and the second light collecting region.

The plurality of bent portions is arranged side by side in one direction.

The first and second light collecting regions are disposed side by side in a direction perpendicular to the one direction.

In one embodiment, the lamp according to the present invention may further include a controller configured to receive a control command generated while a vehicle is driven and to selectively light on the planar portions based on the control command.

In one embodiment, while at least several of the planar portions are all lighted off, the controller may sequentially light on the at least several of the planar portions along one direction until the at least several of the planar portions are all turned on.

In one embodiment, a time interval, from when one of the at least several of the planar portions is lighted on until when all of the at least several of the planar portions are turned on, may be 115 to 195 milliseconds (ms).

### ADVANTAGEOUS EFFECTS

According to the present invention, an additional structure (or fixture) is not necessarily provided in the front of a light source to achieve a stereoscopic illumination pattern, thereby simplifying a structure of a lamp.

### BRIEF DESCRIPTION OF THE DRAWINGS

FIG. 1 is a conceptual view illustrating one embodiment of a lamp for a vehicle (or a vehicle lamp) using a semiconductor light emitting device according to the present invention.
FIG. 2 is a conceptual view illustrating a flip chip type semiconductor light emitting device.
FIG. 3 is a conceptual view illustrating a vertical type semiconductor light emitting device.
FIG. 4 is a conceptual view of a lamp according to the present invention.
FIG. 5 is a conceptual view illustrating planar portions having different areas.
FIG. 6 is a conceptual view illustrating bent portions bent at different angles.
FIG. 7 is a conceptual view illustrating a planar portion including a non-light-emitting region.
FIGS. 8 and 9 are conceptual views of a lamp having a light collecting portion, wherein Fig. 8 discloses an embodiment according to the present invention, and Fig. 9 discloses an embodiment not according to the present invention.

### MODES FOR CARRYING OUT THE PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present invention, if a detailed explanation for a related known technology or construction is considered to unnecessarily divert the essence of the present invention, such explanation has been omitted but would be understood by those skilled in the art. The accompanying drawings are used to help easily understand the technical idea of the present invention and it should be understood that the idea of the present invention is not limited by the accompanying drawings, but only by the appended claims.

It will be understood that when an element such as a layer, area or substrate is referred to as being "on" another element, it can be directly on the element, or one or more intervening elements may also be present.

A vehicle lamp described in this specification may include a head lamp, a tail lamp, a position lamp, a fog lamp, a turn signal lamp, a brake lamp, an emergency lamp, a backup lamp, and the like. However, it will be readily apparent to those skilled in the art that the configuration according to the embodiments described herein may also be applied to a new product type that will be developed later if the device is a device capable of emitting light.

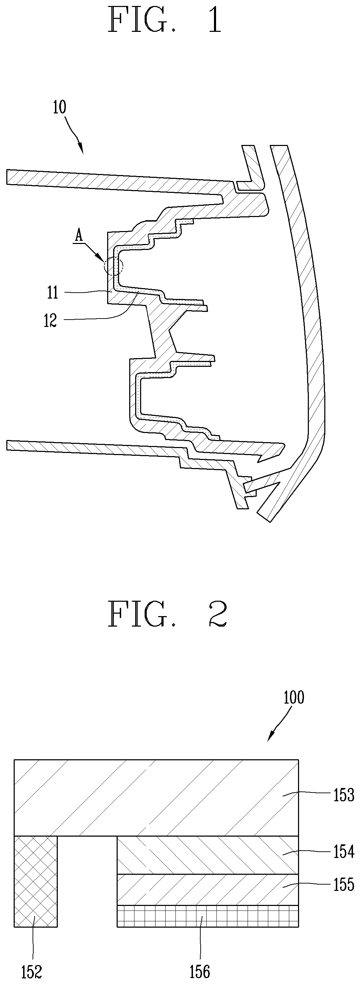

FIG. 1 is a conceptual view illustrating one embodiment of a lamp for a vehicle (or a vehicle lamp) using a semiconductor light emitting device according to the present invention.

A vehicle lamp 10 according to one embodiment of the present invention includes a frame 11 fixed to a vehicle body, and a light source unit 12 installed on the frame 11.

A wiring line for supplying power to the light source unit 12 may be connected to the frame 11, and the frame 11 may be fixed to the vehicle body directly or by using a bracket. According to the present invention, the vehicle lamp 10 may be provided with a lens unit to more diffuse and sharpen light emitted from the light source unit 12.

The light source unit 12 may be a flexible light source unit that can be curved, bent, twisted, folded, or rolled by an external force.

In a non-curved state of the light source unit 12 (e.g., a state having an infinite radius of curvature, hereinafter, referred to as a "first state"), the light source unit 12 is flat. When the first state is switched to a state that the light source unit 12 is bent by an external force (e.g., a state having a finite radius of curvature, hereinafter, referred to as a "second state"), the flexible light source unit may have a curved surface with at least part curved or bent.

A pixel of the light source unit 12 may be implemented by a semiconductor light emitting device. The present invention exemplarily illustrates a light emitting diode (LED) as a type of semiconductor light emitting device for converting an electric current into light. The LED may be a light emitting device having a small size, and may thus serve as a pixel even in the second state.

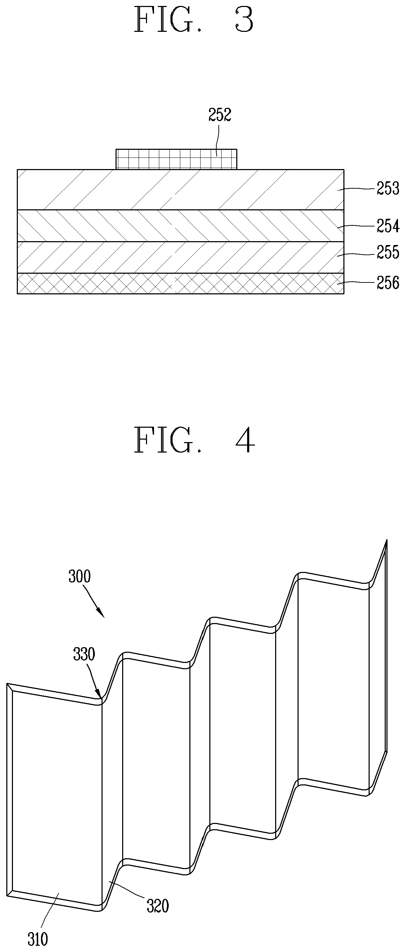

FIG. 2 is a conceptual view illustrating a flip chip type semiconductor light emitting device, and FIG. 3 is a conceptual view illustrating a vertical type semiconductor light emitting device.

Since the semiconductor light emitting device 150 has excellent brightness, it can constitute an individual unit pixel even though it has a small size. The size of the individual semiconductor light emitting device 150 may be less than 80 µm in the length of one side thereof, and may be a rectangular or square shaped device. In this case, an area of the single semiconductor light emitting device is in the range of 10-10 to 10-5 m2, and an interval between light emitting devices may be in the range of 100 um to 10 mm.

Referring to FIG. 2, the semiconductor light emitting device 150 may be a flip chip type light emitting device.

For example, the semiconductor light emitting device includes a p-type electrode 156, a p-type semiconductor layer 155 on which the p-type electrode 156 is formed, an active layer 154 disposed on the p-type semiconductor layer 155, an n-type electrode 153 disposed on the active layer 154, and an n-type electrode 152 disposed on the n-type semiconductor layer 153 with being spaced apart from the p-type electrode 156 in a horizontal direction.

Alternatively, the semiconductor light emitting device 250 may have a vertical structure.

Referring to FIG. 3, the vertical type semiconductor light emitting device includes a p-type electrode 256, a p-type semiconductor layer 255 formed on the p-type electrode 256, an active layer 254 formed on the p-type semiconductor layer 255, an n-type semiconductor layer 253 formed on the active layer 254, and an n-type electrode 252 formed on the n-type semiconductor layer 253.

The plurality of semiconductor light emitting devices 250 constitute a light emitting device array, and an insulating layer is interposed between the plurality of light emitting devices 250. However, the present disclosure is not necessarily limited thereto, but alternatively employs a structure in which an adhesive layer fully fills a gap between the semiconductor light emitting devices without the insulating layer.

The insulating layer may be a transparent insulating layer including silicon oxide (SiOx) or the like. As another example, the insulating layer may be formed of epoxy having excellent insulation characteristic and low light absorption, a polymer material such as methyl, phenyl-based silicone and the like, or an inorganic material such as SiN, Al2O3 and the like, in order to prevent shorting between electrodes.

Although the embodiments of the semiconductor light emitting device have been described above, the present invention is not limited to the semiconductor light emitting device but may be alternately realized through various semiconductor light emitting devices. For example, the lamp according to the present invention may include an organic light emitting diode.

In the lamp according to the present invention, a three-dimensional illumination or lighting pattern may be achieved without an additional structure.

FIG. 4 is a conceptual view illustrating a lamp according to the present invention.

The lamp according to the present invention includes a light source unit 300 in the form of a surface. A plurality of light sources may be disposed on one surface of the light source unit 300. When the plurality of light sources is disposed within a predetermined distance to emit light, it may look like the light source unit 300 emits light as one surface. That is, the light source unit 300 itself is not formed as one surface light source, but is viewed as a surface.

The light source unit 300 may be provided with light-emitting regions defined in a partial region thereof so that light is emitted, and non-light-emitting regions defined in the remaining region so that no light is emitted. Since no light source is disposed on the non-light-emitting regions, components, such as a wiring electrode, for applying a current or a voltage to light sources may be disposed thereat.

Meanwhile, as no light source is disposed on the non-light-emitting regions, there is no concern that the light sources can get damaged even when an external force is applied. Thus, the non-light-emitting regions may be modified in various forms. This will be described hereinafter.

In the present invention, a three-dimensional illumination pattern using the light source unit 300 in the form of a surface is realized. To this end, at least a part or portion of the light source unit 300 may be bent. In detail, the light source unit 300 includes a plurality of planar (or flat) portions disposed on different planes.

The planar portions may be mainly classified into two types. In detail, the planar portions may include a first planar portion 310 disposed toward the outside (or in an outward direction) and a second planar portion 320 disposed obliquely to the outward direction. Here, the outward direction may mean a direction in which light is emitted from the lamp.

Since the light emitted from the first planar portion 310 is mostly emitted to the outside, an amount (or quantity) of light emitted from the first planar portion 310 may determine a quantity of light of the lamp. On the other hand, since some of the light emitted from the second planar portion 320 is not emitted to the outside, its impact on the amount of light of the lamp is relatively small compared to the first planar portion 310. However, as the second planar portion 320 is seen at an angle different from that of the first planar portion 310, the second planar portion 320 may allow the lamp to achieve three-dimensional illumination.

Meanwhile, two different planar portions may be connected by a bent portion 330 formed in a bending manner. Since the bent portion 330 is disposed between two different planar portions 310 and 320, the bent portion 330 may be provided in plural when there are more than two planar portions.

The two different planar portions 310 and 320 may be disposed with one bent portion 330 interposed therebetween and disposed at one end and another end of the bent portion 330, respectively.

Meanwhile, when the light source unit 300 is designed to be bent plural (or multiple) times, the light source unit 300 may be alternately folded in opposite directions. With this structure, two bent portions disposed with one planar portion interposed therebetween may be bent in different directions. In one embodiment, the light source unit 300 in the form of a surface may have a stair (or steps) structure, as illustrated in FIG. 4.

Meanwhile, the bent portions 330 may be configured as non-light-emitting regions. A plurality of light sources may be arranged on the light source unit 300 in the form of a flat surface with a predetermined interval. As the light source unit 300 is designed to be bent, a distance between the light sources may be narrowed or widened. When the distance between the light sources is narrowed, a short (or short circuit) may occur between the light sources. In order to prevent this, the light source unit 300 should be bent only in a direction away from each other.

As a result, a direction that allows the light source unit 300 to be bent is limited, which causes design restrictions in the lamp. Thus, the bent portion 330 may be configured as a non-light-emitting region, so that the light source unit 300 is bent in any direction. Since no light source is disposed on the non-light-emitting region, a short between the light sources due to bending of the light source unit 300 may be prevented.

As described above, the lamp according to the present invention includes a plurality of planar portions. As the planar portions are disposed on different planes, a three-dimensional illumination pattern may be implemented when light is emitted from each of the planar portions. Accordingly, the present invention may achieve a three-dimensional illumination pattern by using a light source in the form of a surface without a separate or additional optical device.

Hereinafter, various modified embodiments of the light source unit according to the present invention will be described.

A plurality of planar portions included in the light source unit according to the present invention may have a different area from each other.

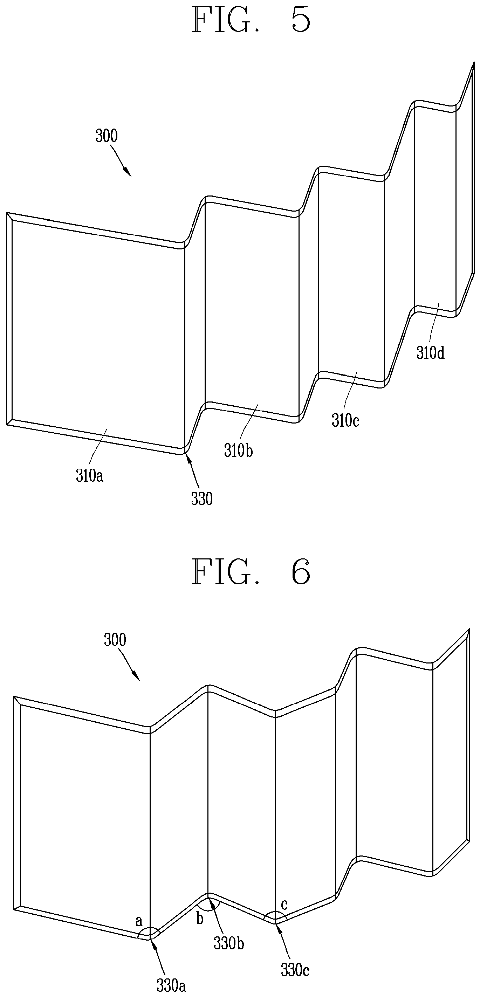

FIG. 5 is a conceptual view illustrating planar portions having different areas.

Each of a plurality of planar portions 310a to 310d included in the light source unit 300 may have a different area. In particular, the first planar portions may have a different area from each other. In one embodiment, the area of each of the planar portions 310a to 310d may decrease along one direction, as illustrated in FIG. 5. When light is emitted from each of the planar portions 310a to 310d, an illumination pattern in which a light emitting area is reduced in one direction may be formed.

In the present invention, the area of the planar portions may vary by adjusting a position at which the bent portion 330 is formed, as described above. This may allow various illumination patterns to be realized.

Meanwhile, each of a plurality of bent portions included in the light source unit 300 according to the present invention may be bent at a different angle.

FIG. 6 is a conceptual view illustrating bent portions bent at different angles.

As for at least some (or several) of the planar portions, an angle between two adjacent planar portions may be greater than 90°. That is, a bent portion 330a may be bent at an obtuse angle. One of the two adjacent planar portions, one is a first planar portion directed outward and the other is a second planar portion. In order for the second planar portion to be exposed to the outside, an angle between the first and second planar portions should be greater than 90°. The greater the angle between the first and second planar portions, the greater (or larger) the area of the second planar portion exposed to the outside.

In this case, the second planar portion may be formed as a light-emitting region. In the lamp according to the present invention, the angle between the first and second planar portions is an obtuse angle, and light is emitted from the second planar portion, thereby increasing the amount of light of the lamp.

In another embodiment, an angle between the two adjacent planar portions may be less than 90°. That is, a bent portion 330b may be bent at an acute angle. When the angle between the first and second planar portions is less than 90°, the second planar portion is not exposed to the outside. Accordingly, most of the light emitted from the second planar portion is not emitted to the outside. In order to prevent unnecessary light loss, the second planar portion may be configured as a non-light-emitting region when the angle between the first and second planar portions is less than 90°.

As described above, the present invention may implement a three-dimensional illumination pattern by varying a bending angle of the light source unit.

Meanwhile, the planar portions included in the light source unit according to the present invention may be partially configured as non-light-emitting regions.

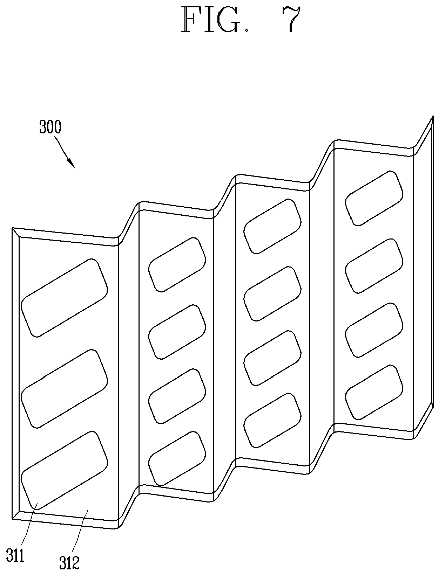

FIG. 7 is a conceptual view illustrating a planar portion having a non-light-emitting region.

Light is emitted from each of the planar portions, and is then emitted to outside. In order to maximize the amount of light emitted to the outside, the planar portions may be disposed toward the outside. As shown in FIG. 7, a part of the planar portion may be configured as a light-emitting region 311, and another part of the planar portion may be formed as a non-light-emitting region 312. The non-light-emitting region 312 formed on the planar portion may be viewed as an edge of the lamp. This may allow various design options for the lamp.

Meanwhile, the lamp according to the present invention includes a light collecting unit.

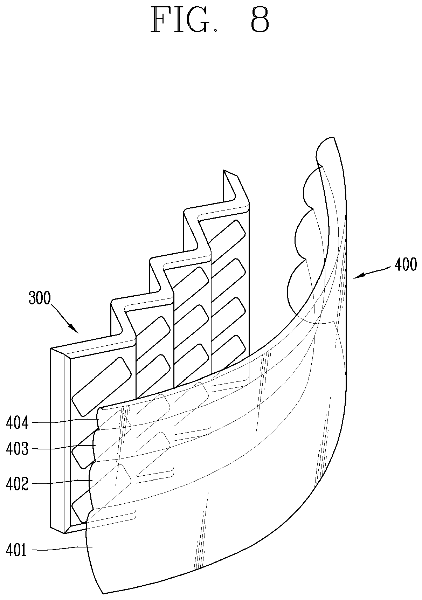

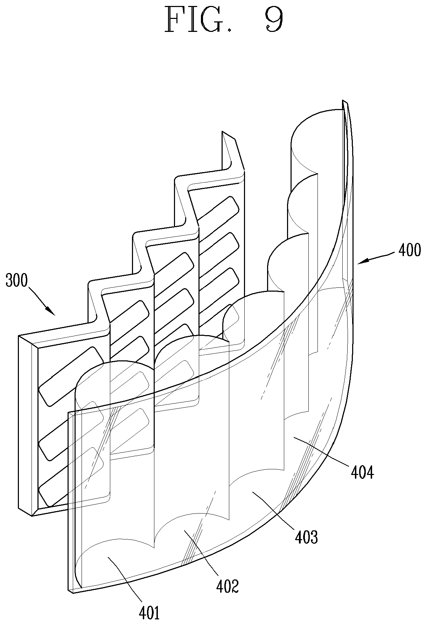

FIGS. 8 and 9 are conceptual views illustrating a lamp having a light collecting unit, wherein Fig. 8 discloses an embodiment according to the present invention, and Fig. 9 discloses an embodiment not according to the present invention.

The lamp according to the present invention includes a first light collecting region for concentrating or collecting light at a first focal length, a second light collecting region for collecting light at a second focal length, which is different from the first focal length, and a light collecting unit 400 disposed to overlap the light source unit 300. The light collecting unit 400 comprises the first light collecting region 401 and the second light collecting region 402.

As the first light collecting region and the second light collecting region collect light at different locations, a three-dimensional illumination pattern may be realized. By utilizing this, an additional three-dimensional effect may be given to a surface light source.

The light collecting regions may be disposed by using two different manners or methods.

Referring to FIG. 8, which discloses an embodiment according to the invention, while a plurality of bent portions is arranged side by side in one direction, a plurality of light collecting regions 401 to 404 is disposed in a direction perpendicular to the one direction.

When the plurality of bent portions is arranged side by side along the one direction, a three-dimensional illumination pattern may be formed in the one direction, but not in the direction perpendicular to the one direction. Thus, the light collecting regions are arranged side by side in a direction perpendicular to a direction in which the bent portions are disposed, so that a three-dimensional illumination pattern may also be implemented in the direction perpendicular to the one direction.

With this configuration, the present invention may realize a three-dimensional illumination pattern in one direction through a bent surface light source, and achieve a three-dimensional illumination pattern in a direction perpendicular to the one direction through the light collecting regions.

Referring to FIG. 9, which discloses an embodiment not according to the present invention, while the plurality of bent portions is arranged side by side in one direction, the plurality of light collecting regions 401 to 404 may be arranged side by side along the one direction.

When the light collecting regions 401 to 404 are arranged side by side in the one direction, a three-dimensional illumination effect in the one direction may be increased. The light collecting unit 400 may allow the three-dimensional effect of the lamp to be enhanced.

Meanwhile, the lamp according to the present invention may further include a controller configured to receive a control command generated while a vehicle is driven, and to control the planar portions to be lighted on based on the control command.

Here, the control command may be generated by a sensing result of a sensing unit disposed in the vehicle or a user input applied through an interface unit.

The sensing unit may sense a status (or state) of the vehicle. The sensing unit may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotational angle of a steering wheel, external illumination, pressure applied to an accelerator, pressure applied to a brake pedal and the like.

The sensing unit may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit may serve as a path allowing the vehicle to interface with various types of external devices connected thereto. For example, the interface unit may be provided with a port connectable with a mobile terminal, and connected to the mobile terminal through the port. In this instance, the interface unit may exchange data with the mobile terminal.

A controller (or control unit) disposed in the vehicle may generate a control command for controlling the lamp based on a sensing result of the sensing unit or a user input applied through the interface unit.

The controller provided in the lamp may receive the control command and change an illumination pattern corresponding to the tail lamp to an illumination pattern corresponding to turn signal lamps (or direction-indicator lamps).

In one embodiment, the controller may turn on at least some of the planar portions disposed on the lamp so that the tail lamp is implemented. When a control command corresponding to the direction-indicator lamps is received, the controller controls such that at least some (or several) of the planar portions are lighted off. Then, while the at least several of the planar portions are all turned off, the controller sequentially lights on the at least several of the planar portions along one direction until the at least several of the planar portions are all turned on. Accordingly, the direction-indicator lamps may be realized.

Here, a time interval may be 115 to 195 milliseconds (ms) from when one of the at least several of the planar portions is lighted on until when all of the at least several of the planar portions are turned on.

## Claims

1. A vehicle lamp (10) having a light source unit (300) in a form of a surface, wherein the light source unit (300) comprises:
a plurality of planar portions (310, 320) having a surface shape and disposed in different planes; and
a plurality of bent portions (330) connecting two different planar portions (310, 320) and formed in a bending manner,
wherein two planar portions (310, 320) disposed with one bent portion interposed therebetween are provided at one end and another end of the bent portion, respectively,
wherein two bent portions (330) disposed with one planar portion interposed therebetween are bent in different directions, and
wherein the light source unit (300) is provided with light-emitting regions (311) defined in a partial region thereof so that light is emitted, and non-light-emitting (312) regions defined in the remaining region so that no light is emitted,
**characterized in that**
the vehicle lamp further (10) comprises a first light collecting region (401) for collecting light at a first focal length;
a second light collecting region (402) for collecting light at a second focal length different from the first focal length; and
a light collecting unit (400) disposed to overlap the light source unit (300),
wherein the light collecting unit (400) comprises the first light collecting region (401) and the second light collecting region (402),
wherein the plurality of bent portions (330) is arranged side by side in one direction, and
wherein the first and second light collecting regions (401, 402) are disposed side by side in a direction perpendicular to the one direction.

2. The vehicle lamp of claim 1, wherein the bent portions (330) are configured as non-light-emitting regions (312).

3. The vehicle lamp of claim 2, wherein the planar portions (310, 320) are partially configured as non-light-emitting regions (312).

4. The vehicle lamp of claim 1, wherein at least several of the planar portions (310, 320) are configured such that an angle between two adjacent planar portions (310, 320) is less than 90°.

5. The vehicle lamp of claim 4, wherein any one of the two planar portions (310, 320) having the angle of less than 90° therebetween is configured as a non-light-emitting region.

6. The vehicle lamp of claim 1, wherein at least several of the planar portions (310, 320) are configured such that an angle between two adjacent planar portions is greater than 90°.

7. The vehicle lamp of claim 6, wherein each of the two planar portions (310, 320) having the angle of greater than 90° therebetween is configured as a light-emitting-region at least a part thereof.

8. The vehicle lamp of claim 1, further comprising a controller configured to receive a control command generated while a vehicle is driven and to selectively light on the planar portions (310, 320) based on the control command.

9. The vehicle lamp of claim 8, wherein the controller, while at least several of the planar portions (310, 320) are all lighted off, sequentially lights on the at least several of the planar portions (310, 320) along one direction until the at least several of the planar portions (310, 320) are all turned on.

10. The vehicle lamp of claim 8, wherein a time interval, from when one of the at least several of the planar portions (310, 320) is lighted on until when all of the at least several of the planar portions (310, 320) are turned on, is 115 to 195 milliseconds (ms).

## Patentansprüche

1. Fahrzeugleuchte (10) mit einer Lichtquelleneinheit (300) in Form einer Fläche,
wobei die Lichtquelleneinheit (300) umfasst:
eine Vielzahl von ebenen Abschnitten (310, 320) mit einer Oberflächenform, die in verschiedenen Ebenen angeordnet sind; und
eine Vielzahl von gebogenen Abschnitten (330), die zwei verschiedene ebene Abschnitte verbinden (310, 320) verbinden und gebogen ausgebildet sind,
wobei zwei ebene Abschnitte (310, 320), die mit einem gebogenen Abschnitt dazwischen angeordnet sind, jeweils an einem Ende und einem anderen Ende des gebogenen Abschnitts vorgesehen sind,
wobei zwei gebogene Abschnitte (330), die mit einem ebenen Abschnitt dazwischen angeordnet sind, in unterschiedliche Richtungen gebogen sind, und
wobei die Lichtquelleneinheit (300) mit Licht emittierenden Bereichen (311), die in einem Teilbereich davon definiert sind, so dass Licht emittiert wird, und mit nicht lichtemittierenden Bereichen (312), die in dem verbleibenden Bereich definiert sind, so dass kein Licht emittiert wird,
**dadurch gekennzeichnet, dass** die Fahrzeugleuchte (10) ferner umfasst: einen ersten Lichtsammelbereich (401) zum Sammeln von Licht bei einer ersten Brennweite;
einen zweiten Lichtsammelbereich (402) zum Sammeln von Licht bei einer zweiten Brennweite, die sich von der ersten Brennweite unterscheidet; und
eine Lichtsammeleinheit (400), die so angeordnet ist, dass sie die Lichtquelleneinheit (300) überlappt,
wobei die Lichtsammeleinheit (400) den ersten Lichtsammelbereich (401) und den zweiten Lichtsammelbereich (402) umfasst,
wobei die mehreren gebogenen Abschnitte (330) in einer Richtung nebeneinander angeordnet sind, und
wobei der erste und der zweite Lichtsammelbereich (401, 402) in einer Richtung senkrecht zu der einen Richtung nebeneinander angeordnet sind.

2. Fahrzeugleuchte nach Anspruch 1, wobei die gebogenen Abschnitte (330) als nicht lichtemittierende Bereiche (312) ausgebildet sind.

3. Fahrzeugleuchte nach Anspruch 2, wobei die ebenen Abschnitte (310, 320) teilweise als nicht lichtemittierende Bereiche (312) ausgebildet sind.

4. Fahrzeugleuchte nach Anspruch 1, wobei mindestens mehrere der ebenen Abschnitte (310, 320) so konfiguriert sind, dass ein Winkel zwischen zwei benachbarten ebenen Abschnitten (310, 320) weniger als 90° beträgt.

5. Fahrzeugleuchte nach Anspruch 4, wobei einer der beiden ebenen Abschnitte (310, 320) mit einem Winkel von weniger als 90° dazwischen als nicht lichtemittierender Bereich ausgebildet ist.

6. Fahrzeugleuchte nach Anspruch 1, wobei mindestens mehrere der ebenen Abschnitte (310, 320) so konfiguriert sind, dass ein Winkel zwischen zwei benachbarten ebenen Abschnitten größer als 90° ist.

7. Fahrzeugleuchte nach Anspruch 6, wobei jeder der beiden ebenen Abschnitte (310, 320), zwischen denen ein Winkel von mehr als 90° besteht, zumindest teilweise als lichtemittierender Bereich ausgebildet ist.

8. Fahrzeugleuchte nach Anspruch 1, die ferner eine Steuereinheit umfasst, die so konfiguriert ist, dass sie einen während der Fahrt eines Fahrzeugs erzeugten Steuerbefehl empfängt und die ebenen Abschnitte (310, 320) auf der Grundlage des Steuerbefehls selektiv beleuchtet.

9. Fahrzeugleuchte nach Anspruch 8, wobei die Steuereinheit, während mindestens mehrere der ebenen Abschnitte (310, 320) alle ausgeschaltet sind, die mindestens mehreren ebenen Abschnitte (310, 320) entlang einer Richtung nacheinander einschaltet, bis die mindestens mehreren ebenen Abschnitte (310, 320) alle eingeschaltet sind.

10. Fahrzeugleuchte nach Anspruch 8, wobei ein Zeitintervall von dem Zeitpunkt, zu dem einer der mindestens mehreren ebenen Abschnitte (310, 320) eingeschaltet wird, bis zu dem Zeitpunkt, zu dem alle mindestens mehreren ebenen Abschnitte (310, 320) eingeschaltet sind, 115 bis 195 Millisekunden (ms) beträgt.

## Revendications

1. Lampe de véhicule (10) comportant une unité de source lumineuse (300) sous la forme d'une surface,
dans laquelle l'unité de source lumineuse (300) comprend :
une pluralité de parties planes (310, 320) ayant une forme de surface et disposées dans des plans différents ; et
une pluralité de parties courbées (330) reliant deux parties planes différentes (310, 320) et formées de manière courbée,
dans laquelle deux parties planes (310, 320) disposées avec une partie courbée interposée entre elles sont prévues respectivement à une extrémité et à une autre extrémité de la partie courbée,
dans laquelle deux parties courbées (330) disposées avec une partie plane interposée entre elles sont courbées dans des directions différentes, et
dans laquelle l'unité de source lumineuse (300) est pourvue de zones émettrices de lumière (311) définies dans une zone partielle de celle-ci de manière à émettre de la lumière, et de zones non émettrices de lumière (312) définies dans la zone restante de manière à ne pas émettre de lumière,
**caractérisé en ce que** le feu de véhicule (10) comprend en outre : une première région de collecte de lumière (401) pour collecter la lumière à une première distance focale ;
une deuxième région de collecte de lumière (402) pour collecter la lumière à une deuxième distance focale différente de la première distance focale ; et
une unité de collecte de lumière (400) disposée de manière à recouvrir l'unité de source lumineuse (300),
dans lequel l'unité de collecte de lumière (400) comprend la première région de collecte de lumière (401) et la deuxième région de collecte de lumière (402),
dans lequel la pluralité de parties courbées (330) est disposée côte à côte dans une direction, et
dans lequel les première et deuxième régions de collecte de lumière (401, 402) sont disposées côte à côte dans une direction perpendiculaire à ladite direction.

2. Lampe de véhicule selon la revendication 1, dans laquelle les parties courbées (330) sont configurées comme des régions non émettrices de lumière (312).

3. Lampe de véhicule selon la revendication 2, dans laquelle les parties planes (310, 320) sont partiellement configurées comme des régions non émettrices de lumière (312).

4. Lampe de véhicule selon la revendication 1, dans lequel au moins plusieurs des parties planes (310, 320) sont configurées de telle sorte que l'angle entre deux parties planes adjacentes (310, 320) est inférieur à 90°.

5. Lampe de véhicule selon la revendication 4, dans lequel l'une quelconque des deux parties planes (310, 320) ayant un angle inférieur à 90° entre elles est configurée comme une zone non émettrice de lumière.

6. Lampe de véhicule selon la revendication 1, dans laquelle au moins plusieurs des parties planes (310, 320) sont configurées de telle sorte que l'angle entre deux parties planes adjacentes est supérieur à 90°.

7. Lampe de véhicule selon la revendication 6, dans lequel chacune des deux parties planes (310, 320) présentant un angle supérieur à 90° entre elles est configurée comme une zone d'émission de lumière sur au moins une partie de celle-ci.

8. Lampe de véhicule selon la revendication 1, comprenant en outre un contrôleur configuré pour recevoir une commande de contrôle générée pendant que le véhicule roule et pour allumer de manière sélective les parties planes (310, 320) sur la base de la commande de contrôle.

9. Lampe de véhicule selon la revendication 8, dans lequel le contrôleur, alors qu'au moins plusieurs des parties planes (310, 320) sont toutes éteintes, allume séquentiellement les au moins plusieurs parties planes (310, 320) dans une direction jusqu'à ce que les au moins plusieurs parties planes (310, 320) soient toutes allumées.

10. Lampe de véhicule selon la revendication 8, dans laquelle un intervalle de temps, entre le moment où l'une des au moins plusieurs parties planes (310, 320) est allumée et le moment où toutes les au moins plusieurs parties planes (310, 320) sont allumées, est compris entre 115 et 195 millisecondes (ms).
